(19) Europäisches Patentamt
European Patent Office
Office européen des brevets

(11) **EP 1 098 175 A1**

(12) **EUROPÄISCHE PATENTANMELDUNG**

(43) Veröffentlichungstag:
**09.05.2001 Patentblatt 2001/19**

(51) Int. Cl.[7]: **G01F 23/18**

(21) Anmeldenummer: **00122952.5**

(22) Anmeldetag: **21.10.2000**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **05.11.1999 DE 19953216**

(71) Anmelder:
• **Solvay Automotive GmbH
38667 Bad Harzburg (DE)**
• **Stabil Elektronik GmbH
73730 Esslingen (DE)**

(72) Erfinder:
• **Striegel, Klaus
21109 Hamburg (DE)**
• **Frank, Wolfgang
83052 Bruckmühl (DE)**
• **Liekefett, Klaus
38259 Salzgitter (DE)**
• **Mohrmann, Klaus
70794 Filderstadt (DE)**

(74) Vertreter:
**Lauer, Dieter, Dr. et al
Solvay Pharmaceuticals GmbH,
Hans-Böckler-Allee 20
30173 Hannover (DE)**

(54) **Füllstandsmessgerät**

(57) Füllstandsmeßgerät enthaltend

- eine in Abhängigkeit vom Füllstand auslenkbare Membran,

- einen Stabmagneten, der so an der Membran angeordnet ist, daß er den Auslenkungen der Membran folgen kann,

- einen GMR-Sensor als magneto-resistives Element, wobei der GMR-Sensor auf einer Meßplatine so angeordnet ist, daß die radiale Feldkomponente quer zur Achse des Stabmagneten gemessen wird.

Figur 1

**Beschreibung**

Die Erfindung bezieht sich auf eine Vorrichtung zur Erfassung des Füllstandes von Fluiden in einem Behälter, z.B. Wischwasserbehälter in Kraftfahrzeugen, Kraftstoffbehälter u.ä..

Bedingt durch die unterschiedlichsten Eigenschaften der Füllgüter und der unterschiedlichen Formgebung der Behälter existieren für die spezifischen Einsatzfälle entsprechend zugeordnete Lösungen zur Füllstandsmessung.

So sind Vorrichtungen zur Füllstandsmessung bekannt, die auf dem Schwimmerprinzip, beruhen, d.h. ein schwimmfähiger Körper auf der Flüssigkeitsoberfläche ist entweder radial über einen Hebelarm mit einem Anzeigegerät direkt oder indirekt verbunden, oder wird an elektrischen Sensoren, z.B. Reed-Kontakten, vorbeigeführt.

Füllstandsmeßgeräte mit einer Membran, die mit einer Seite dem Meßmedium zugewandt ist und auf ihrer anderen Seite einen elektromechanischen Wandler hat, durch den die Membran in Schwingungen versetzbar ist, sind ebenfalls bekannt.

Hierbei wird das unterschiedliche Schwingungsverhalten der Membran bei Vorhandensein oder Fehlen von Flüssigkeit in einer Auswerteeinrichtung erfaßt.

Die DE-OS 36 40 942 beschreibt einen Druckwandler zum Erfassen eines Flüssigkeitsdruckes und zur Erzeugung eines elektrischen Signals in Abhängigkeit von dem erfaßten Druck, wobei eine in Abhängigkeit von dem zu erfassenden Druck auslenkbare Membran, an der ein Magnet derart angeordnet ist, daß er den Bewegungen der Membran folgt, mit einem magneto-resistiven Element, dessen elektrischer Widerstand in Abhängigkeit von Änderungen des Magnetfeldes veränderbar ist, kombiniert ist, und das magneto-resistive Element dem Magneten gegenüberliegend angeordnet ist.

Die DE 29 09 609 beschreibt eine Flüssigkeitspegel-Fühlvorrichtung, die im Verschlußdeckel eines Fluidbehälters angeordnet ist. Diese Fühlvorrichtung umfaßt eine Wandlereinrichtung, die den galvanomagnetischen Effekt ausnutzt, sowie eine in Abhängigkeit vom Flüssigkeitspegel bewegliche magnetische Einrichtung, die der Wandlereinrichtung gegenüber angeordnet ist.

Das Gebrauchsmuster DE 88 02 675 U1 offenbart eine universell einsetzbare Überfüllsicherung, bei der die Meßelemente nicht mit dem Füllmedium in Berührung kommen. Die Überfüllsicherung weist einen mit Faltenbalg versehenen Membrankörper auf. Im Bodenbereich des Faltenbalges ist ein Magnet mit einem darüber angeordneten Halleffektsensor und eine Magnetbruchüberwachung angeordnet.

Der Erfindung liegt die Aufgabe zugrunde eine Vorrichtung zur kontinuierlichen Füllstandsmessung von Fluiden in Behältern bereitzustellen, die unabhängig von der äußeren Form des Behälters mit hoher Meßgenauigkeit die Füllstandshöhe ermittelt. Die Vorrichtung soll keine beweglichen Teile im zu messenden Medium aufweisen.

Die Aufgabe wird erfindungsgemäß durch ein Füllstandsmeßgerät mit den Merkmalen gemäß Anspruch 1 bis 6 gelöst. Die Füllstandshöhe wird durch Messung der Änderung des hydrostatischen Druckes in den Fluidbehältern ermittelt.

Das erfindungsgemäße Füllstandsmeßgerät umfaßt eine von dem zu erfassenden Druck auslenkbare Membran,

- mindestens einen Stabmagneten, der bezüglich der Membran so angeordnet ist, daß er den Auslenkungen der Membran folgt,

- eine Meßplatine auf der sich als Bestandteil der Auswerteschaltung mindestens ein magnetoresistives Element befindet, dessen elektrischer Widerstand sich in Abhängigkeit von seiner Position im Magnetfeld des Stabmagneten ändert und das so positioniert ist, daß die Änderung der horizontalen Feldkomponente quer zur Achse des Stabmagneten gemessen wird,

- Befestigungs- und Halterungseinrichtung mit dessen Hilfe das Füllstandsmeßgerät im Fluidbehälter befestigt oder positioniert wird.

Erfindungsgemäß werden Membran, Meßplatine und elektrische Anschlußkabel in einem Gehäuse angeordnet, das mittels der Befestigungs- und Halterungseinrichtungen im Fluidbehälter befestigt oder positioniert wird.

Das erfindungsgemäße Füllstandsmeßgerät ist z.B. einsetzbar zur Messung der Füllstandshöhe in Wischwasserbehältern oder zur Messung des Füllstandes in Kraftstoffbehältern.

Während zur Messung des Füllstandes in Wischwasserbehältern auch im Behälter der äußere Luftdruck herrscht, muß zur Messung des Füllstandes in Kraftstoffbehältern der gegebenenfalls auftretende, vom äußeren Luftdruck abweichende Überdruck oder Unterdruck berücksichtigt werden, indem ein dichtes Gehäuse verwendet wird, das zusätzlich eine dem Druckausgleich dienende Schlauch- oder Rohrverbindung, die mit einem an der Oberseite des Kraftstofftanks befindlichen Stutzen verbunden ist, aufweist.

Im Einzelnen wird die Aufgabe erfindungsgemäß gelöst, durch ein am tiefsten Punkt des Fluidbehälters **1** angeordnetes Gehäuse **12**, das an der dem Fluid zugewandten Seite Einlaßöffnungen **3** aufweist, in dem sich eine runde Membran **6**, die in Abhängigkeit von dem zu erfassenden hydrostatischen Druck auslenkbar angeordnet ist, befindet. An der der beaufschlagten Flüssigkeit abgewandten Seite der Membran **6** ist mindestens ein Stabmagnet **9** derart angeordnet, daß er den Auslenkungen derselben folgt. In dem Gehäuse **12** , gegenüber der Membran **6**, ist eine Meßplatine **7** angeordnet, auf der sich als Bestandteil der Auswerteschaltung ein magneto-resistives Element **8** befindet, dessen elektrischer Widerstand sich in Abhängigkeit von seiner Position im Magnetfeld des Stabmagnetes **9** ändert und das so positioniert ist, daß es seitlich (radial) vom Magneten **9** angeordnet ist, so daß die horizontale Feldkomponente quer zur Achse des Stabmagneten **9** , gemessen wird.

Als magneto-resistives Element **8** wird erfindungsgemäß eine Vollbrücke, eine aus 4 GMR-Elementen (Giant-Magneto-Resitive-Sensor) bestehende Brückenschaltung, verwendet. GMR-Elemente sind Mehrschichtsysteme, die wenigstens eine hartmagnetische Biasschicht beinhalten, durch deren Magnetisierungsrichtung eine Bezugsrichtung vorgegeben ist, und die wenigstens eine weichmagnetische Meßschicht beinhalten, deren Magnetisierungsrichtung sich nach einem extern angelegten Magnetfeld ausrichtet. Der Widerstand der GMR-Elemente hängt von der relativen Orientierung der Magnetisierung dieser beiden Schichten ab.

Die Erfindung soll nachstehend anhand von Zeichnungen näher erläutert werden.
Es zeigen

Fig. 1: einen Querschnitt des erfindungsgemäßen Füllstandsmeßgerätes (Wischwasserbehälter)

Fig. 2: einen Querschnitt des erfindungsgemäßen Füllstandsmeßgerätes mit Ausgleich des Tankinnendruckes (Kraftstoffbehälter)

Fig. 3: ein Diagramm über den Verlauf des Sensorsignals

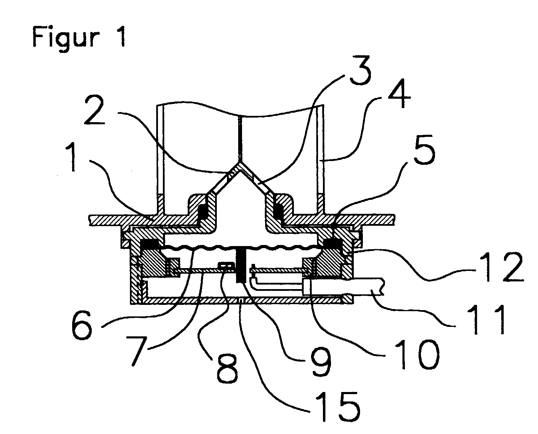

Im einzelnen zeigt Figur 1 das erfindungsgemäße Füllstandsmeßgerät in einem Wischwasserbehälter.

Das an dem Flüssigkeitsbehälter **1** anflanschbare Gehäuse, vorzugsweise Kunststoffgehäuse **12** hat eine kegelförmige Kappe **2**, die in den Flüssigkeitsbehälter hineinragt. In der Kappe befinden sich eine oder mehrere Einlaßöffnungen **3**, so daß das im Behälter befindliche Fluid oberhalb der im Inneren des Gehäuses angeordneten Membran **6** in das Gehäuse gelangt und Druck auf diese Membran ausüben kann. Im Gehäuseboden ist mindestens eine Druckausgleichsöffnung 15 angebracht.

Die Membran **6** ist eine dünne scheibenförmige Platte, die in dem Gehäuse so angeordnet ist, daß zwischen der Oberseite der Membran **6** und der Gehäusewandung eine Dichtung **5** angebracht ist, so daß die Membran **6** durch die auf ihr lastende Flüssigkeit in vertikaler Richtung auslenkbar ist.

Ein Stabmagnet **9** ist mit seiner Stirnseite in der Mitte der Membran **6** an deren Unterseite befestigt und folgt den vertikalen Auslenkungen derselben.

Unterhalb der Membran **6** ist eine Meßplatine **7** angeordnet. Auf der Meßplatine **7** befindet sich die Auswerteschaltung die mit dem GMR-Sensor **8**, der auf der Meßplatine angeordnet ist, elektrisch verbunden ist. Die Meßdaten werden über ein elektrisches Anschlußkabel **11** an eine Anzeigeeinheit oder die Bordelektronik des Fahrzeuges übermittelt.

Der an der Membran **6** befestigte Stabmagnet **9** tritt durch eine ausreichend große Bohrung in der Mitte der Meßplatine **7**. Der GMR-Sensor **8** ist unmittelbar neben dieser Bohrung auf der Meßplatine **7** angebracht. Aufgrund seiner Richtungsabhängigkeit erfaßt der GMR-Sensor **8** ausschließlich die radiale Komponente des durch den Stabmagneten **9** erzeugten Magnetfeldes. Befindet sich der Stabmagnet **9** mit seiner Mittelebene genau auf Höhe des GMR-Brückensensors **8**, so liefert dieser wegen der dort fehlenden radialen Feldkomponente unter idealen Bedingungen die Ausgangsspannung Null Volt. Aufgrund des Feldlinienverlaufs treten bei einer axialen Verschiebung des Stabmagneten **9** aus dieser Position in der Ebene des Sensors **8** radiale Feldkomponenten auf, die zu einer entsprechenden Ausgangsspannung führen. In einem bei erfindungsgemäßer Auswahl und Anordnung der Komponenten ausreichend großen Verschiebungsbereich ist dabei die Ausgangsspannung des GMR-Brückensensors, von der Mittelposition ausgehend, direkt proportional zur Position des Magneten **9**. Es besteht ein linearer Zusammenhang

$$U = aX + b$$

U = Ausgangsspannung des GMR-Brückensensors, [Volt]
a = Proportionalitätsfaktor [Volt/mm]
X = Position des Stabmagneten, [mm]
b = Offest-Term [Volt]

Da die Auslenkung der Membran **6** und damit die Position des an dieser befestigten Stabmagneten **9** linear vom auf der Membran **6** lastenden hydrostatischen Druck, also der Füllstandshöhe der Flüssigkeit abhängt, kann die vom GMR-Brückensensor **8** gelieferte Ausgangsspannung somit unmittelbar bzw. nach elektronischer Verstärkung als Maß für die Füllhöhe verwendet werden, oder sie wird z.B. in ein pulsweitenmoduliertes Signal umgewandelt, das im Frequenzbereich von z.B. 2 Hz Eingang in die Bordelektronik des Fahrzeuges findet und so als Füllstandsanzeige dienen kann.

Die Auslenkung der Membran **6** und damit des Stabmagneten **9** bei maximalem Flüssigkeitsfüllstand beträgt wenige Millimeter, insbesondere ca. 10 % bis 20 % der Länge des Stabmagneten **9**.

Die Terme a (Proportionalitätsfaktor) und b (Offset) beinhalten neben den spezifischen Eigenschaften der Membran, des Stabmagneten, des GMR-Sensors und der Auswerteschaltung auch alle Bauteil- und Fertigungstoleranzen.

Aufgrund der Linearität ist zu ihrer Bestimmung lediglich die Messung der Ausgangsspannung bei zwei unterschiedlichen Magnetpositionen, entsprechend zwei unterschiedlichen Füllständen, erforderlich.

Der Abgleich des Füllstandsmeßgerätes auf einen gewünschten Verlauf des Ausgangssignals kann erfindungsgemäß durch mechanische Justierung oder durch elektronischen Abgleich erfolgen.

In einer Ausführungsform der Erfindung wird die mechanische Justierung dadurch erreicht, daß die Meßplatine 7 über einen mit einem Gewinde versehenen Außenring in axialer Richtung zum Magneten verstellt wird, wodurch sich z.B. bei minimalem Flüssigkeitsfüllstand die Offsetspannung b einstellen läßt. Die kreisrunde Platine selbst ist in diesem Außenring exzentrisch gelagert, wodurch eine Drehung der Platine innerhalb dieses Außenrings eine Änderung des Abstands zwischen dem GMR-Brückensensor und dem Stabmagneten zur Folge hat. Dieses entspricht einer Änderung des Proportionalitätsfaktors a.

In einer weiteren Ausführungsform der Erfindung wird keinerlei mechanische Justierung durchgeführt. Dazu befindet sich auf der Platine ein Microcontroller, der in bereits eingebautem Zustand programmiert werden kann ("end-of-line"-Programmierung). Der Abgleich erfolgt, nach Messung des Ausgangssignals bei zwei bekannten Füllständen, durch die Programmierung von 2 Parametern, die den Termen a und b entsprechen. Als Ausgangssignal kann z.B. ein PWM-Signal erzeugt werden, dessen Tastverhältnis oder Pulsweite direkt die Füllhöhe angibt.

In dem Flüssigkeitsbehälter 1 können vertikale Zwischenwände 4 angeordnet sein, welche die für die Füllstandsmessung vorgesehene Flüssigkeitssäule (Fluidsäule) beruhigen.

Bei Verwendung des für einen elektronischen Abgleich vorgesehenen Microcontrollers kann dieser vorteilhaft ohne weiteren Aufwand zusätzlich auch zur elektronischen Beruhigung des Ausgangssignals verwendet werden.

Bei der Ermittlung der Füllstandshöhe in Wischwasserbehältern können, bedingt durch Alkoholzugabe (Winterbetrieb) Änderungen der Dichte der Flüssigkeiten, die Änderung der Membranauslenkung nach sich ziehen, auftreten. Um diese Abweichungen erfassen zu können, ist es ebenfalls im Sinne der Erfindung, mindestens zwei der erfindungsgemäßen Füllstandsmeßgeräte in unterschiedlicher Höhe des Behälters anzuordnen. Aus der Differenz der Ausgangssignale lassen sich unmittelbar die Dichte der Flüssigkeit und der Füllstand ermitteln.

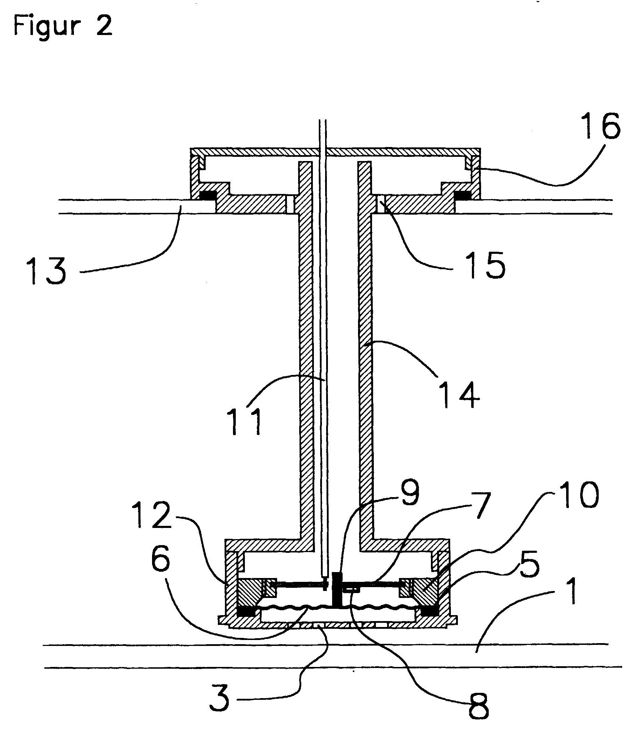

Die Figur 2 zeigt das erfindungsgemäße Füllstandsmeßgerät in einem Kraftstoffbehälter. Das Füllstandsmeßgerät unterscheidet sich nur in Details von dem oben beschriebenen. Das Meßprinzip ist das gleiche. Aufgrund der räumlichen Anordnung waren z.B. konstruktive Änderungen bezüglich der Halte- und Befestigungsvorrichtungen erforderlich. Im Gegensatz zu der oben beschriebenen Ausführung, wo der Druck des Fluids von oben auf die Membran wirkt, übt das Fluid in dieser Ausführungsform den Druck von unten auf die Membran aus.

Das dichte Gehäuse 12 ist an einem Verbindungsrohr 14 befestigt. Die Länge des Verbindungsrohrs 14 wird so bemessen, daß das Gehäuse möglichst am tiefsten Punkt des Kraftstoffbehälters angeordnet werden kann. Das Verbindungsrohr 14 und das Gehäuse 12 wird von oben in den Kraftstoffbehälter eingesetzt und mittels Stutzen 16 mit der Oberseite 13 des Kraftstoffbehälters verbunden. Im Stutzen 16 befindet sich mindestens eine Druckausgleichsöffnung 15, so daß der auf der Flüssigkeitsoberfläche lastende Tankinnendruck über das Verbindungsrohr 14 auf die Oberseite der Membran 6 wirken kann.

Die Druckmembran 6 und die Meßplatine 7 sind im Gehäuse 12 derart angeordnet, daß der Flüssigkeitsdruck von unten auf die Membran 6 wirkt. Der Kraftstoff gelangt durch die Einlaßöffnungen 3 in das Gehäuse und übt Druck auf die Membran 6 aus. Die Membran 6 ist wie oben beschrieben mit einer Dichtung 5 mit der Gehäusewandung verbunden und in vertikaler Richtung auslenkbar.

Mindestens ein Stabmagnet 9 ist mit seiner Stirnseite in der Mitte der Membran 6 an deren Oberseite befestigt und folgt den Auslenkungen derselben. Oberhalb der Membran 6 ist die Meßplatine 7 angeordnet.

Auf der Meßplatine 7 befindet sich die Auswerteschaltung, die mit dem GMR-Sensor 8, der auf der Meßplatine 7 angeordnet ist, elektrisch verbunden ist. Aufgrund seiner Richtungsabhängigkeit erfaßt auch hier der GMR-Sensor 8 die radiale Komponente des durch den Stabmagneten erzeugten Magnetfeldes. Das Meßprinzip entspricht auch in dieser Ausführungsform der Erfindung der bereits oben beschriebenen Art und Weise.

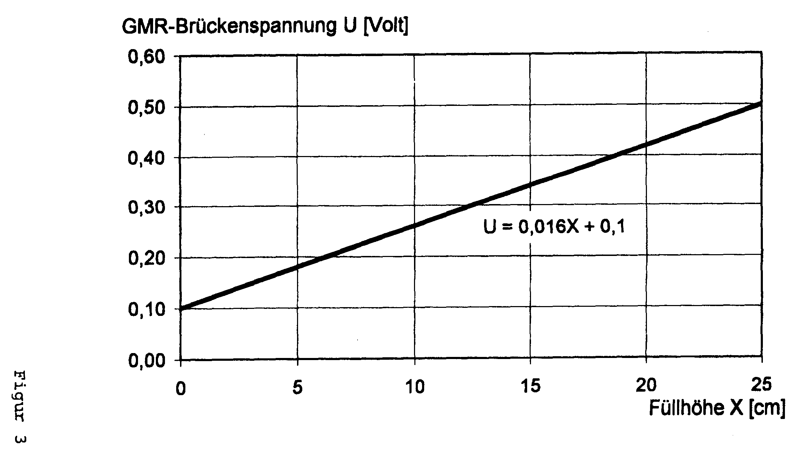

Die Fig. 3 zeigt den typischen Verlauf der GMR-Brückenspannung in Abhängigkeit von der Füllstandshöhe.

Aufstellung der Bezugszeichen

| | |
|---|---|
| 1 | Boden des Fluidbehälters |
| 2 | kegelförmige Kappe |
| 3 | Einlaßöffnungen |
| 4 | Vertikaleinbauten im Fluidbehälter |
| 5 | Membrandichtung |
| 6 | Membran |
| 7 | Meßplatine mit Auswerteschaltung |
| 8 | GMR-Sensor |
| 9 | Stabmagnet |

| 10 | Außenring |
|---|---|
| 11 | elektrische Anschlußkabel |
| 12 | Gehäuse |
| 13 | Oberseite des Fluidbehälters |
| 14 | Verbindungsrohr |
| 15 | Druckausgleichsöffnung, zum äußeren Luftdruck, bzw. Tankinnendruck |
| 16 | Stutzen |

**Patentansprüche**

1. Füllstandsmeßgerät enthaltend

   - eine in Abhängigkeit von dem in einem Fluidbehälter zu erfassenden Füllstand eines Fluids auslenkbare Membran **(6)**,

   - einen Stabmagneten **(9)**, welcher bezüglich der Membran **(6)** so angeordnet ist, daß er den Auslenkungen derselben folgt

   - ein magnetoresistives Element **(8)**, dessen elektrischer Widerstand in Abhängigkeit von Änderungen des Magnetfeldes veränderbar ist und

   - Halte- und Befestigungseinrichtungen, wobei in einem starren Gehäuse **(12)**, das an der dem Fluid zugewandten Seite Einlaßöffnungen **(3)** aufweist, die Membran **(6)** so befestigt ist, daß sie vertikal auslenkbar ist,

   - in der Mitte der Membran **(6)** an deren dem Fluid abgewandten Seite der Stabmagnet **(9)** mit seiner Stirnseite befestigt ist, und das magnetoresistive Element ein GMR-Sensor **(8)** ist, der auf einer Meßplatine **(7)** so angeordnet ist,

   - und die horizontale, radiale Feldkomponente quer zur Achse des Stabmagneten **(9)** gemessen wird, wobei die Meßplatine **(7)** eine Öffnung aufweist, durch die der Stabmagnet gleiten kann.

2. Füllstandsmeßgerät nach Anspruch 1, dadurch gekennzeichnet, daß das am tiefsten Punkt des Fluidbehälters angeflanschte Gehäuse **(12)** eine kegelförmige Kappe **(2)** mit den Einlaßöffnungen **(3)** aufweist, die in den Fluidbehälter hineinragt.

3. Füllstandsmeßgerät nach Anspruch 1, dadurch gekennzeichnet, daß das Gehäuse **(12)** mittels einer Rohr- oder Schlauchverbindung **(14)** von oben in den Fluidbehälter eingeführt und am tiefsten Punkt des Fluidbehälters positioniert wird, wobei die Rohr- oder Schlauchverbindung **(14)** mit einem Stutzen **(16)** an der Oberseite des Fluidbehälters verbunden ist, und der Stutzen **(16)** mindestens eine Druckausgleichsöffnung **(15)** **aufweist.**

4. Füllstandsmeßgerät nach Anspruch 1, dadurch gekennzeichnet, daß die Meßplatine **(7)** über einen mit einem Gewinde versehenen Außenring **(10)** in axialer Richtung zum Magneten verstellbar ist.

5. Füllstandsmeßgerät nach Anspruch 4, dadurch gekennzeichnet, daß die Platine **(7)** im Außenring **(10)** exzentrisch gelagert ist.

6. Füllstandsmeßgerät nach Anspruch 1, dadurch gekennzeichnet, daß auf der Meßplatine **(7)** ein Microcontroller zum Abgleich des Meßgerätes angeordnet ist.

Figur 1

Figur 2

GMR-Brückenspannung U [Volt]

$U = 0,016X + 0,1$

Füllhöhe X [cm]

Figur 3

Europäisches
Patentamt

**EUROPÄISCHER RECHERCHENBERICHT**

Nummer der Anmeldung

EP 00 12 2952

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 4 335 608 A (WOOD RUSSELL J ET AL) 22. Juni 1982 (1982-06-22) * Spalte 1, Zeile 63 - Spalte 3, Zeile 39; Abbildungen 1-4 * | 1,3 | G01F23/18 |
| A | US 4 358 956 A (RUBEN SAMUEL ET AL) 16. November 1982 (1982-11-16) * Spalte 3, Zeile 15 - Spalte 7, Zeile 19; Abbildungen 1-3 * | 1,3 | |
| D,A | DE 88 02 675 U (HENKEL WOLFGANG E) 14. April 1988 (1988-04-14) * Seite 3, letzter Absatz - Seite 4, letzter Absatz; Abbildungen 1-3 * | 1 | |
| D,A | DE 29 09 609 A (DENKI ONKYO CO LTD ;AISIN SEIKI (JP)) 27. September 1979 (1979-09-27) * Seite 9, Zeile 28 - Seite 12, Zeile 4; Abbildungen 1,2,7,8 * | 1 | |
| D,A | DE 36 40 942 A (NIHON RADIATOR CO ;TGK CO LTD (JP)) 22. Oktober 1987 (1987-10-22) * Spalte 3, Zeile 68 - Spalte 8, Zeile 53; Abbildungen 1-6 * | 1 | RECHERCHIERTE SACHGEBIETE (Int.Cl.7) G01F |

Der vorliegende Recherchenbericht wurde für alle Patentansprüche erstellt

| Recherchenort | Abschlußdatum der Recherche | Prüfer |
|---|---|---|
| DEN HAAG | 26. Februar 2001 | Heinsius, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

**ANHANG ZUM EUROPÄISCHEN RECHERCHENBERICHT
ÜBER DIE EUROPÄISCHE PATENTANMELDUNG NR.**

EP 00 12 2952

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-02-2001

| Im Recherchenbericht angeführtes Patentdokument | | Datum der Veröffentlichung | Mitglied(er) der Patentfamilie | | Datum der Veröffentlichung |
|---|---|---|---|---|---|
| US 4335608 | A | 22-06-1982 | KEINE | | |
| US 4358956 | A | 16-11-1982 | US EP | 4227410 A 0018185 A | 14-10-1980 29-10-1980 |
| DE 8802675 | U | 14-04-1988 | KEINE | | |
| DE 2909609 | A | 27-09-1979 | JP GB US | 54121167 A 2017928 A,B 4217779 A | 20-09-1979 10-10-1979 19-08-1980 |
| DE 3640942 | A | 22-10-1987 | AU AU FR US | 569828 B 6464486 A 2597599 A 4722229 A | 18-02-1988 22-10-1987 23-10-1987 02-02-1988 |

EPO FORM P0461

Für nähere Einzelheiten zu diesem Anhang : siehe Amtsblatt des Europäischen Patentamts, Nr.12/82